# EUROPÄISCHE PATENTSCHRIFT

(11) **EP 1 693 921 B1**
(45) Veröffentlichungstag und Bekanntmachung des Hinweises auf die Patenterteilung: **31.12.2008**
(21) Anmeldenummer: 06001088.1
(22) Anmeldetag: 19.01.2006
(51) Int. Cl.: H01Q 1/50, H04N 5/46

(54) **Elektrisches Gerät zum Schutz von Endgeräten**
Electric apparatus for protecting terminals
Appareil électrique pour protection de terminals

(30) Priorität: 22.02.2005 DE 202005002899 U
(43) Veröffentlichungstag der Anmeldung: 23.08.2006
(73) Patentinhaber: OBO Bettermann GmbH & Co. KG, 58710 Menden (DE)
(72) Erfinder: Schurwanz, Jürgen Heinz, 58708 Menden (DE)
(74) Vertreter: Köchling, Conrad-Joachim

(56) Entgegenhaltungen:
- WO-A-03/030386
- DE-A1- 3 513 230
- DE-A1- 19 728 623
- DE-A1- 19 856 939
- DE-U1- 9 217 814
- US-A- 5 278 720
- KOENIG R ET AL: "BLITZSCHUTZ AN SAT-ANLAGEN" FUNKSCHAU, WEKA FACHZEITSCHRIFTEN VERLAG, POING, DE, Bd. 67, Nr. 3, 20. Januar 1995 (1995-01-20), Seiten 40-43, XP000501833 ISSN: 0016-2841

## Beschreibung

Die Erfindung betrifft ein elektrisches Gerät zum Schutz von Endgeräten.

Zum Schutz von Endgeräten, die an eine Satelliten- oder Antennenanlage angeschlossen sind, werden bisher individuell Überspannungselemente in die entsprechenden Leitungen integriert, was sowohl von der Herstellung als auch von der Montage her sehr aufwändig ist.

Aus der Literaturstelle Koenig- R et al: Blitzschutz an Sat- Anlagen, Funkschau, WEKA Fachzeitschriftenverlag, Poing, DE, Bd 67, Nr.3, 20 Januar 1995 (1995-01-20), Seiten 40-43, XP 000 501 833, ISSN: 0016-2841, ist ein Gerät gemäß Oberbegriff des Anspruches 1 bekannt. Auch die DE 197 28 623 A1 zeigt ein gattungsgemäßes Gerät.

Eine doppellagige Platine ist an sich aus der US-A 5,278,720 sowie der WO03/030386 A bekannt.

Ausgehend von diesem Stand der Technik liegt der Erfindung die Aufgabe zugrunde, ein elektrisches Gerät gattungsgemäßer Art zu schaffen, welches in einfacher Weise an Satelliten- und/oder Antennenanlagen angeschlossen werden kann, wobei die Durchleitung hoher Frequenzen bei geringer Dämpfung ermöglicht werden soll und ein Schutz gegen Überspannungen sicher gestellt werden soll.

Die Aufgabe wird durch ein elektrisches Gerät zum Schutz von Endgeräten gelöst, wie in Anspruch 1 angegeben.

Ein solches elektrisches Gerät dient zum Schutz von Endgeräten, die über eine Satelliten- oder Antennenanlage angeschlossen sind, vor Überspannungen. Die Überspannungen können infolge einer atmosphärischen Entladung (Gewitter) oder durch induktive oder kapazitive Einkopplung auftreten. Das erfindungsgemäße Gerät wird unmittelbar vor dem zu schützenden Endgerät installiert, wobei das Endgerät abhängig vom Anwendungsfall ein Fernseher, ein Receiver oder auch ein Multiswitch (Verstärker) sein kann. Der terrestrische Eingang kann auch zum Anschluss des Kabelfernsehens genutzt werden, da dieser im gleichen Frequenzband liegt.

Ein entsprechendes Gerät ist in einfacher Weise mittels einer Halterung und Schrauben an einer Gebäudefläche zu installieren. Das Gerät ist für vier Anschlüsse einer Satellitenanlage und für einen Anschluss einer Antennenanlage ausgebildet.

Durch die entsprechende Ausbildung wird eine kompakte Bauweise gefördert und ebenso eine störungsfreie Funktion. Dadurch, dass in die Leiterbahnschleife Überspannungsschutzkomponenten integriert sind, ist einerseits ein Schutz gegen Überspannungen gewährleistet und andererseits erreicht, dass hohe Frequenzen bei geringer Dämpfung sowie geringer Eingangs- und Ausgangsreflexion durchgeleitet werden können. Insbesondere förderlich sind hierfür auch die Stichleitungen. Die Bemessung der Stichleitungen kann empirisch erfolgen. Auch die Blitzschutzkomponenten sind ohne Auswirkungen auf das durchzulassende Hochfrequenzsignal.

Durch die Ausbildung eines Fensters auf der Platinenunterseite im Bereich der jeweiligen Leiterbahnschleife wird eine elektrische Beeinflussung durch Masseflächen vermieden.

Eine bevorzugte Weiterbildung wird darin gesehen, dass an die Eingangs- und Ausgangsbuchsen jeweils 75 Ohm HF- Leitungen angeschlossen sind.

Auch ist vorgesehen, dass die für den DVB-T Anschluss bestimmte Leiterbahn über eine Überspannungsschutzkomponente, insbesondere einen Gasableiter an die platinenoberseitige Massefläche angeschlossen ist.

Die Überspannungsschutzkomponenten können in Form von Kondensatoren und Dioden ausgebildet sein.

Bei dem DVB-T Anschluss kann ein Gasableiter als Überspannungsschutzkomponente vorgesehen sein.

Ausführungsbeispiele der Erfindung sind in der Zeichnung dargestellt und im Folgenden näher beschrieben.

Es zeigt:
- Figur 1: die Anwendung eines erfindungsgemäßen Schutzgerätes mit Multiswitch;
- Figur 2: desgleichen für ein Privathaus mit vierfach- LNB an einer Satellitenschüssel und terrestrischer Antenne;
- Figur 3: die Anwendung des Schutzgerätes für ein Haus mit vier separaten Satellitenschüsseln und einer terrestrischen Antenne;
- Figur 4 und 5: das Platinenlayout für ein entsprechendes Schutzgerät, wobei in Figur 4 die Platinenoberseite und in Figur 5 die Platinenunterseite gezeigt ist.

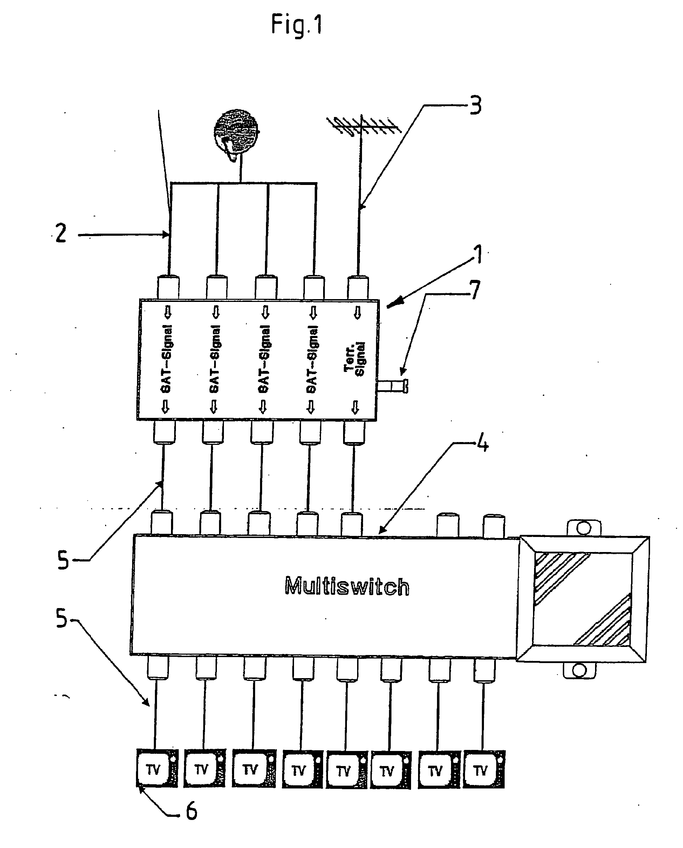

In Figur 1 ist ein Schutzgerät 1 gezeigt, welches über vier 75 Ohm HF- Leitungen 2 an eine Satellitenschüssel und über eine weitere 75 Ohm-Leitung 3 an eine terrestrische Antenne angeschlossen ist. Bei den Leitungen handelt es sich um Koaxialkabel. Auch zwischen dem Schutzgerät 1 und dem Multiswitch 4 sind entsprechende 75 Ohm HF- Leitungen vorgesehen, ebenso wie zwischen Multiswitch 4 und den entsprechenden Endgeräten 6. Bei 7 ist eine Erdungsstelle angegeben.

Der Multiswitch 4 dient zum Verteilen und Verstärken der Signale von der Satellitenleitung und von der terrestrischen Leitung.

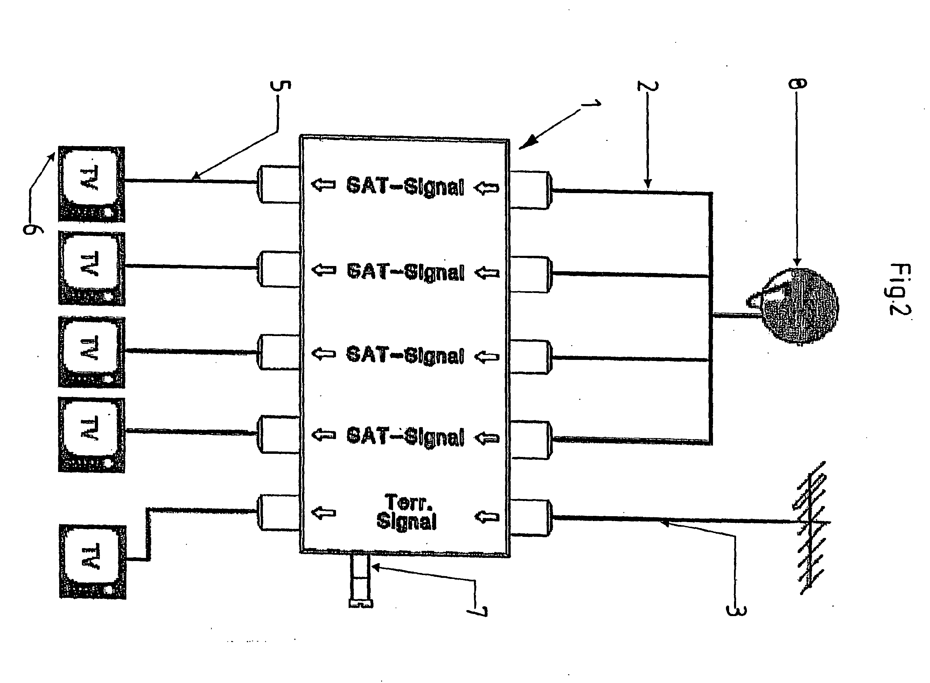

In Figur 2 ist wiederum eine Satellitenschüssel 8 mit vierfach- LNB- Anschluss gezeigt, wobei von dieser entsprechende 75 Ohm HF- Leitungen 2 zum Schutzgerät 1 führen. Das Schutzgerät 1 ist wiederum über 75 Ohm HF- Leitungen 5 mit den einzelnen Endgeräten 6 verbunden.

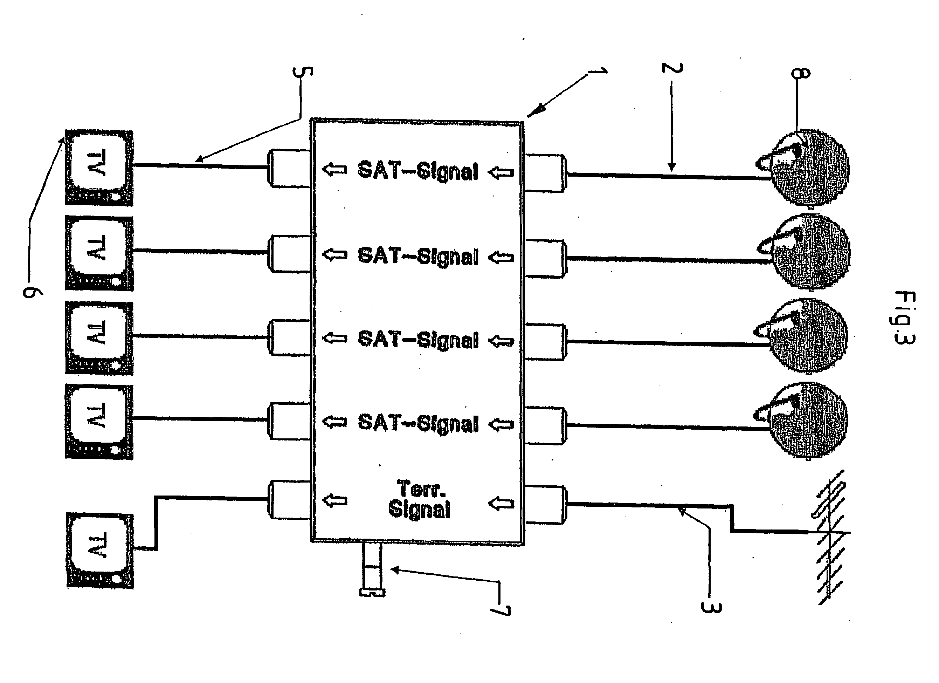

Bei der Darstellung gemäß Figur 3 sind entsprechend vier separate Satellitenschüsseln 8 vorgesehen, die wiederum über 75 Ohm HF-Leitungen 2 mit dem Schutzgerät 1 verbunden sind.

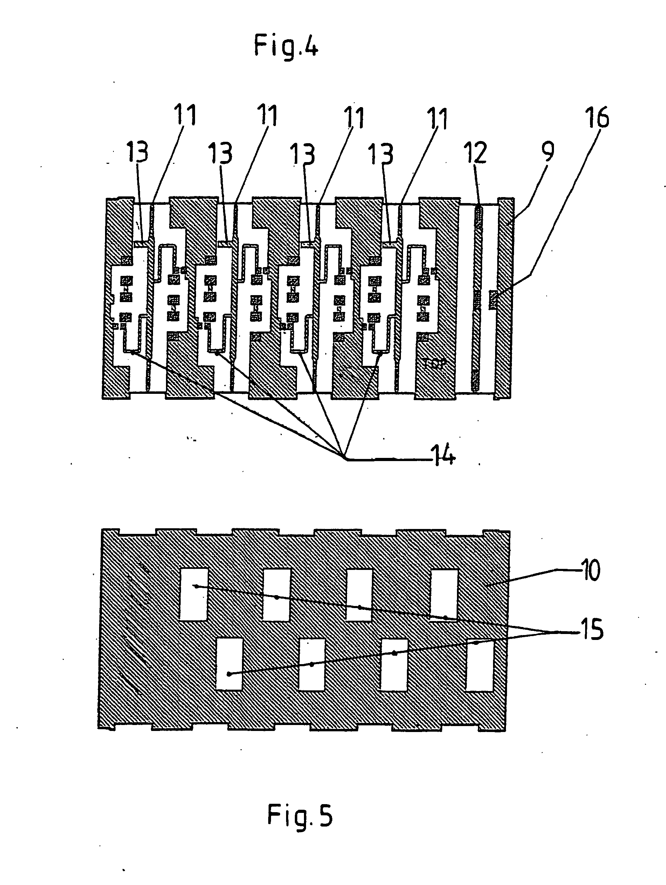

In dem Schutzgerät 1 sind Platinen angeordnet, wobei in Figur 4 eine Schaltplatine 9 gezeigt ist, während in Figur 5 die unterseitig der Schaltplatine 9 angeordnete weitere Masseplatine 10, allerdings spiegelverkehrt, gezeigt ist. Die Schaltplatine 9 weist vier Leiterbahnen 11 für LNB- Anschlüsse und eine Leiterbahn 12 für DVB- T oder Kabelfernsehanschluss auf. Wie in den Figuren 1 bis 3 gezeigt, ist jede Leiterbahn über eine Eingangs- und Ausgangsbuchse an die entsprechenden Leitungen anschließbar. Mit jeder der Leiterbahnen 11 beziehungsweise 12 sind Überspannungsschutzkomponenten gekoppelt.

Das Platinenbauteil ist eine doppellagige Platine 9,10, wobei eine Platine eine Masseplatine 10 mit geräteseitig abgehendem Masseanschluss (bei 7) ist, während die andere Platine eine Schaltplatine 9 mit Leiterbahnen 11,12 und Steckplätzen für die Schutzkomponenten ist. Beide Platinen sind aufeinander angeordnet und durch Isolierung voneinander getrennt.

Jede der Leiterbahnen 11 weist vorzugsweise mindestens eine Stichleitung 13 auf. Durch die Stichleitung wird eine geringe Dämpfung und eine geringe Eingangsreflexion erreicht. Zusätzlich sind zu jeder Leiterbahn 11 Leiterbahnschleifen 14 vorgesehen, in die Überspannungsschutzkomponenten integriert sind. In der Darstellung gemäß Figur 4 sind lediglich die Steckplätze für die Überspannungsschutzkomponenten gezeigt. Es handelt sich hierbei gegebenenfalls um Kondensatoren und Dioden. Insbesondere auch durch diese Ausbildung wird die Anordnung der Blitzschutzkomponenten möglich, ohne dass diese sich auf das durchgeleitete Hochfrequenzsignal auswirken.

Im Bereich der Leiterbahnschleifen 14 sind jeweils in der Masseplatine 10 Fenster 15 ausgebildet, wodurch eine kapazitive Beeinflussung der Leiterbahnschleife 14 auf der Platinenoberseite vermieden ist.

Auch die DVB-T Leiterbahn 12 ist über eine Überspannungsschutzkomponente an die Massefläche der Schaltplatine 9 angeschlossen, wobei entsprechende Steckplätze 16 in der Figur 4 gezeigt sind.

Das Platinenlayout, insbesondere auch die Breite und Länge der Leiterbahnen 11,12 ist durch Empirik zu ermitteln.

Die Erfindung ist nicht auf das Ausführungsbeispiel beschränkt, sondern im Rahmen der Offenbarung vielfach variabel.

## Patentansprüche

1. Elektrisches Gerät (1)zum Schutz von Endgeräten (6), zum Beispiel TV- Geräten, die an eine SAT- oder Antennenanlage angeschlossen sind, gegen Überspannungen, wobei das Gerät (1) ein Platinenbauteil mit vier Leiterbahnen (11) für LNB Anschlüsse und eine Leiterbahn (12) für DVB-T oder Kabelfernsehanschluss aufweist, deren Geräteanschlüsse durch Eingangs- und Ausgangsbuchsen gebildet sind, wobei jeder Leiterbahn (11,12)
Überspannungsschutzkomponenten zugeordnet sind, die auf dem Platinenbauteil positioniert sind, **dadurch gekennzeichnet, dass** als Platinenbauteil eine doppellagige Platine vorgesehen ist, die eine Masseplatine (10) mit geräteseitig abgehendem Masseanschluss (7) und isoliert davon eine Schaltplatine (9) mit den Leiterbahnen (11,12) und Steckplätzen (16) für die Schutzkomponenten aufweist, dass jede Leiterbahn (11) für einen LNB- Anschluss und die Durchleitung des Satellitensignals mindestens eine Stichleitung (13) aufweist, dass jede Leiterbahn (11), die für einen LNB-Anschluss und die Durchleitung des Satellitensignals bestimmt ist, eine Leiterbahnschleife (14) aufweist, in die Überspannungsschutzkomponenten integriert sind, die mit der Masseplatine (10) kontaktiert sind, und dass die Masseplatine (10) jeweils im Bereich der Leiterbahnschleife (14) ein die Leiterbahnschleife (14) unterlegendes Fenster (15) aufweist.

2. Elektrisches Gerät nach Anspruch 1, **dadurch gekennzeichnet, dass** an die Eingangs- und Ausgangsbuchsen jeweils 75 Ohm HF- Leitungen (2,5) angeschlossen sind.

3. Elektrisches Gerät nach einem der Ansprüche 1 oder 2, **dadurch gekennzeichnet, dass** die für den DVB-T Anschluss bestimmte Leiterbahn (12) über eine Überspannungsschutzkomponente, insbesondere einen Gasableiter, an die platinenoberseitige Massefläche der Schaltplatine (9) angeschlossen ist.

## Claims

1. An electrical device (1) for protecting terminals (6), for example television sets connected to a satellite or aerial system, against overvoltage,
wherein the device (1) comprises a printed circuit board component having four tracks (11) for LNB connections and a track (12) for DVB-T or cable television connection, the device connections of which are formed by input and output jacks, with overvoltage protection components that are positioned on the printed circuit board component being assigned to each track (11, 12),
**characterised in that** as the printed circuit board component there is provided double-layered printed circuit board comprising an earth printed circuit board (10) with an earth connection (7) outgoing at the device side and, insulated therefrom, a printed circuit board (9) with the tracks (11, 12) and plug-in positions (16) for the protection components,
**in that** each track (11) for an LNB connection and the conductance of the satellite signal comprises at least one stub (13),
**in that** each track (11) intended for an LNB connection and the conductance of the satellite signal comprises a track loop (14) in which overvoltage protection components are integrated, which are connected to the earth printed circuit board (10),
and **in that** the earth printed circuit board (10) comprises a window (15) situated beneath the track loop (14) in the region of the track loop (14).

2. An electrical device according to Claim 1,
**characterised in that** 75 Ohm HF lines (2, 5) are connected to each of the input and output jacks.

3. An electrical device according to one of Claims 1 or 2,
**characterised in that** the track (12) intended for the DVB-T connection is connected to the earth surface on the top of the printed circuit board (9) via an overvoltage protection component, in particular a gas-discharge protector.

## Revendications

1. Appareil électrique (1) pour la protection de terminaux (6), par exemple de téléviseurs qui sont raccordés à une installation de réception par satellite ou par antenne, contre les surtensions, l'appareil (1) présentant un composant à platines avec quatre pistes conductrices (11) pour des connexions LNB et une piste conductrice (12) pour des connexions DVB-T ou de télévision par câble, dont les raccordements à l'appareil sont formés par des prises d'entrée et de sortie, des composants de protection contre les surtensions qui sont positionnés sur le composant à platines étant associés à chaque piste conductrice (11, 12), **caractérisé en ce qu'**il est prévu comme composant à platines une platine double couche qui présente une platine de masse (10) avec connexion de masse (7) partant côté appareil et, isolée de celle-ci, une platine de commutation (9) avec les pistes conductrices (11, 12) et des emplacements (16) pour les composants de protection, que chaque piste conductrice (11) présente, pour une connexion LNB et la transmission du signal de satellite, au moins une ligne de dérivation (13), que chaque piste conductrice (11) qui est destinée à une connexion LNB et à la transmission du signal de satellite présente une boucle de piste conductrice (14) dans laquelle sont intégrés des composants de protection contre les surtensions qui sont en contact avec la platine de masse (10), et que la platine de masse (10) présente chaque fois dans la zone de la boucle de piste conductrice (14) une fenêtre (15) placée sous la boucle de piste conductrice (14).

2. Appareil électrique selon la revendication 1, **caractérisé en ce que** des lignes HF (2, 5) à 75 ohms sont chaque fois raccordées aux prises d'entrée et de sortie.

3. Appareil électrique selon l'une des revendications 1 ou 2, **caractérisé en ce que** la piste conductrice (12) destinée à la connexion DVB-T est raccordée par l'intermédiaire d'un composant de protection contre les surtensions, en particulier un éclateur à gaz, à la surface de masse côté supérieur de platine de la platine de commutation (9).
